# EUROPEAN PATENT SPECIFICATION

(11) **EP 2 902 837 B1**
(45) Date of publication and mention of the grant of the patent: **26.12.2018**
(21) Application number: 14003870.4
(22) Date of filing: 18.11.2014
(51) Int. Cl.: G02B 26/10, G01N 21/952, G01B 11/24, G01B 11/10

(54) **A high speed magnetic oscillating device**
Mit hoher Geschwindigkeit oszillierende magnetische Vorrichtung
Dispositif oscillant magnétique à grande vitesse

(30) Priority: 30.01.2014 GB 201401564; 20.02.2014 GB 201402987
(43) Date of publication of application: 05.08.2015
(73) Proprietor: Proton Products International Limited, Beaconsfield Buckinghamshire HP9 1LW (GB)
(72) Inventor: Kyriakis, John, Beaconsfield, Buckinghamshire HP9 1LW (GB)
(74) Representative: Allsop, John Rowland

(56) References cited:
- WO-A1-95/29396
- DE-U1-202013 103 566
- US-A- 6 108 118

## Description

### Field of the Invention

The present invention relates to a high speed oscillating system for non-contact optical scanning of elongated products moving in a linear production process to determine the dimensional properties and surface profile integrity thereof.

### Background of the invention

Industrial products such as wires, cable, tubes, ropes and similarly elongated products which are manufactured in continuous linear processes are required to be measured by preferably non-contact methods, to determine the overall size as well as the surface integrity of the profile of the product.

These measurements usually take place while the products are being manufactured in various processes, including extrusion in the case of plastic cables, tubes etc. or drawing machinery, in the case wires, metallic tubes and the like. Measurements at the point of manufacture are necessary, firstly to ensure compliance to specification requirements, and secondly to check on the surface integrity of the finished product.

The primary measurement applied to linearly manufactured elongated products is the diameter or size of the said product, and this is done preferably by optical non-contact devices. Quality control, or surface integrity of the said product, is performed in a similar manner by an optical device whereby, the profile of the said product is examined to ensure that there is no damage or faults, such as ridges valleys and the like, to the surface of the said product. In the prior art in existence at the time when the present invention was envisioned, two alternative optical systems existed, one for dimensional measurements of the said product and an alternative system for checking the surface integrity of the said product. These prior art systems will be explained later in the text.

Further representative prior art will be found having regard to DE Patent 20 2013 103586 which discloses a resonant scanner incorporating two poles with windings forming opposing magnetic fluxes across a gap wherein a magnetic bending element is supported across a gap in a flexible manner.

For overall amplitude and vibration frequency of the scanner an opto-reflective light beam operatively connected to the bending element and to a position sensing device is employed.

US Patent 6 108 118 discloses an optical detector consisting of a semiconductor movable plate supported by a hinge member in a yoke with a reflecting surface on one side and two coils attached at the other side.

A set of magnets are positioned in the yoke around the plate, with a third coil fixed on the yoke to be coplanar with the plate.

The interaction between an AC current applied to the first coil and the magnets exerts a Lorentz force on charged particles present on a \Hall element attached to the plate to rotate the plate.

The second and third coils control the light deflecting angle of the movable plate acting as negative feedback.

WO 95/29396 relates to apparatus to determine the diameter variation and/or colour change of yarns and fibrous objects incorporating a light beam for interacting with the object to produce at least two spectrally different wavelengths of light passing through optical spectral filters.

A photo-detector signal processing unit is provided adapted to supply signals therefrom which are used to analyse the outgoing wavelengths bands from the object thereby to determine the diameter variation and/or colour change thereof.

### Object of the invention

It is the object of this invention to obviate problems and drawbacks of the prior art, by making use of apparatus and methods that increase the scanning frequency of an optical dimensional measuring device, having the capability to measure the diameter or size of a moving product and at the same time check the surface integrity of the product simultaneously, during the manufacturing process of the product.

### Summary of the invention

The object stated above is solved by an apparatus with the features of claim 1. Favourable modifications are defined in the dependent claims.

### Brief Description of the Drawings

The present invention will now be described by reference to the accompanying drawings wherein.
Fig 1 shows in perspective view the main elements of a preferred embodiment of the invention,
Fig 2 and Fig 3 show side views of Fig 1 illustrating the principle of operation of the invention.
Fig 4.1 and Fig 4.2 show the operating principle of the invention in detail.
Fig 5 illustrates the application of the invention to the measurement of dimensions as well as surface imperfections in an extruded product.
Fig 6 shows a prior art device.
Fig 7 illustrates a section of an electric cable formed in an extrusion process with surface faults.
Fig. 8.1 and 8.2 show the principle of time related measurements .
Fig. 9 shows the complete system.
Fig. 10 shows measurements on a screen display.
Fig. 11 depicts single and dual plane applications.
Fig .12 illustrates multi -positional measurements .
Fig. 13 shows fault measurements on an electric cable.

### Detailed Description of Preferred Embodiment of the Invention

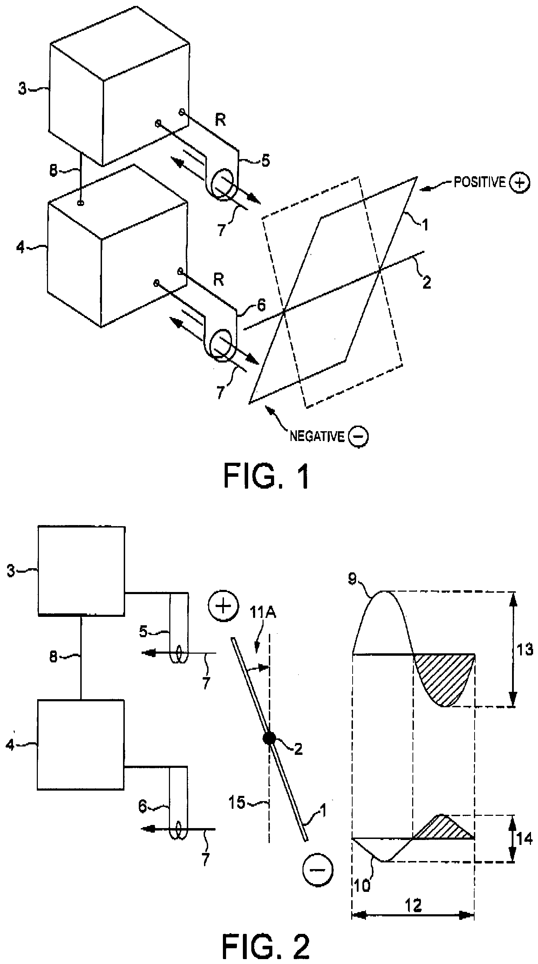

Preferred embodiments of the invention are shown in Figures 1-13.

During the following discussion, reference will be made to Figures 1-13 and when similar items of the apparatus are used, they will be referred to with identical reference numbers.
Notation: meters per minute = m/min
meters per second = m/sec
millimetres per second = mm/sec
cycles per second (cycles/sec)
scans per second = scans/sec

With reference to Fig 1 this illustrates a high frequency oscillating system, comprising a foil 1, magnetized in a plus (+) and minus (-) manner, being supported by a torsion axis 2, preferably two high frequency generators 3 and 4. Each of generators 3, 4 is electrically connected by wiring R to induction coils 5, 6 respectively, which create a magnetic field 7 which interacts with the magnetic foil 1 whereby the magnetic field of coil 5 is directed to the positive half of the foil 1 and the magnetic field of coil 6 is directed to the negative half of the f oil 1

The generators 3 and 4 are synchronized by connection 8 in such a manner, whereby the output frequencies of the generators 3, 4 are identical, but in opposing phase (see Fig 2)

Fig 2-shows a side view of Fig 1 wherein coils 5 and 6 are in close proximity to each half of the foil 1, in order that coil 5 acts on the positive half of the foil 1 and coil 6 acts on the negative half of the foil 1.

The- magnetic field 7 of coil 5 has a waveform 9 shown in Fig 2, which is the main force, driving the oscillation of foil 1, while magnetic field 7 of coil 6, with waveform 10, provides an opposing control force to the oscillation of foil 1. The action of waveform 10, firstly secures stability of foil 1 oscillation and secondly controls the angular swing motion 11 (A+B) of the foil 1.

As previously mentioned, waveforms 9 and 10 are synchronized to the same frequency 12 however the amplitude 13 of waveform 9 is greater than amplitude 14 of waveform 10.

The oscillation of foil 1 occurs as follows; when waveform 9 is in the negative (shaded) half of its cycle, it attracts the positive side of foil 1, from the neutral position 15 shown dotted) through angle 11A, while waveform 10, being in the positive (shaded) half of its cycle also attracts the negative side of foil 1, thus providing the necessary opposing control as required.

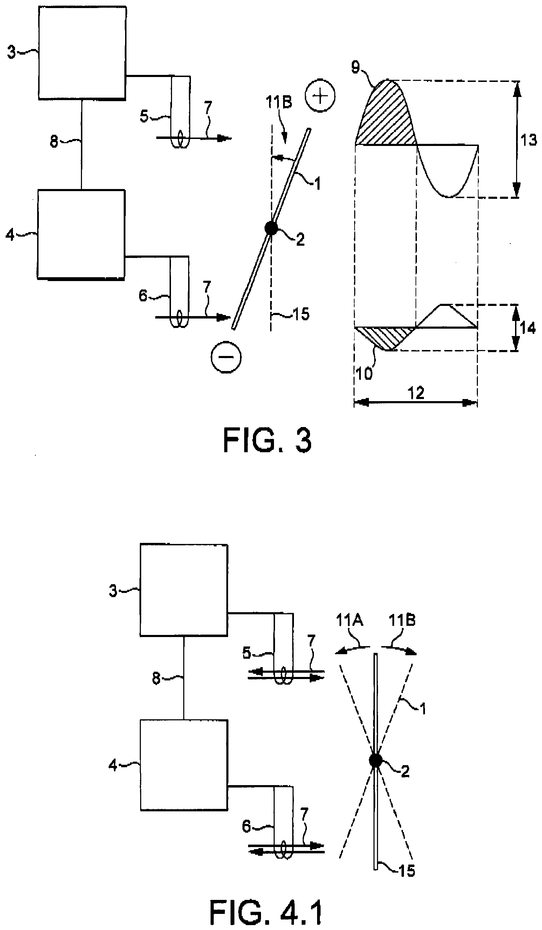

Fig 3 illustrates the position of foil 1, when waveform 9 is in its positive (shaded) half of its cycle, whereby it repels the positive half of foil 1 through angle 11B, while waveforms 10 being in its negative (shaded) half, also repels the negative half of foil 1, again providing the necessary control as required. The torsion axis 2 applies an opposing resistance to the movements of foil 1 which waveforms 9 and 10 to overcome in order to produce the required swing motion.

Fig 4.1 shows the angle of total angular swing of the magnetic foil oscillation of the foil 1, on its axis 2, which is 11 (A+B).

When the system is not in operation the torsion axis 2 returns foil 1 to the rest position 15.

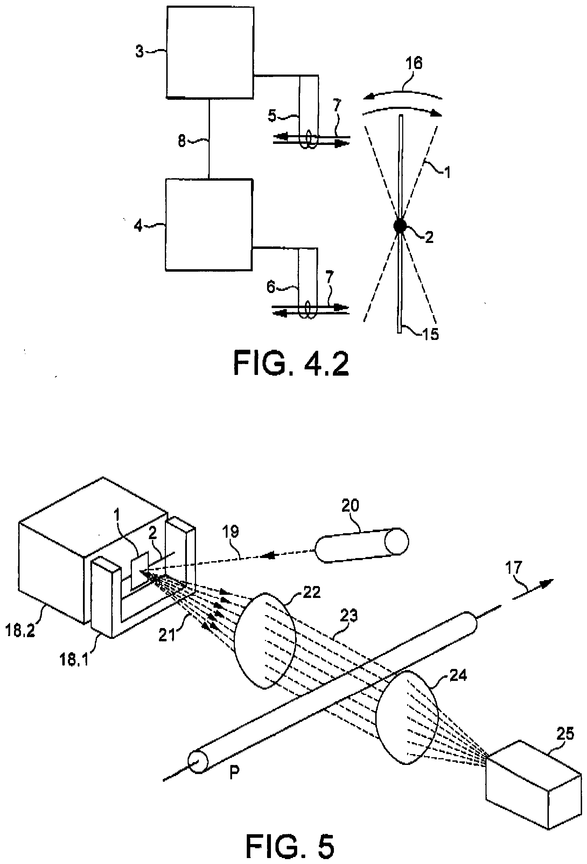

Fig 4.2 illustrates the generators 3/4 in operation, whereby the action of coils 5/6 on foil 1, will cause the foil 1 to oscillate "to and fro" 16 on its axis 2, through an angular swing 11 (A+B) at the same frequency 12 of the generators 3, 4.

As foil 1 oscillates in a "to and fro" motion, this equates to 2 scans per one single cycle of frequency 12. This is a very useful advantage, as it doubles the frequency of generators 3/4. The oscillation frequency 12 which can be achieved using this principle up to 20,000 cycles/sec, which equates to 40,000 scans/sec of foil 1, thus providing a considerable advantage in industrial applications for dimensional measurements of products, as well as their surface integrity.

Fig 5 shows the system of the invention in an industrial application whereby a product, this being an electric cable, wire, plastic tube, hose and the like, is progressing in a linear path of travel 17 during its manufacturing process (not shown), comprising the magnetic foil 1 with a mirrored face is supported by a torsion axis 2, in a cradle 18.1, two high frequency generators 3, 4 (not shown) with associated induction coils 5, 6 (not shown) in housing 18.2.

A ray of light 19 from a source 20, such as, laser or LED (light emitting diode), is directed on to the mirrored face of foil 1, and by the action of the oscillating foil 1, a series of consecutive rays 21 are produced.

The rays 21 are directed on to a lens 22 which convert the rays 21 into a sheet or curtain of parallel scanning rays 23, crossing the product P from one side thereof in its path of travel 17.

A lens 24 positioned on the other side of product P receives rays 23 after passing there through and focuses the rays 23 on to a unit 25, which analyses the focussed rays 23, to provide dimensional as well as surface integrity properties of the product P ..

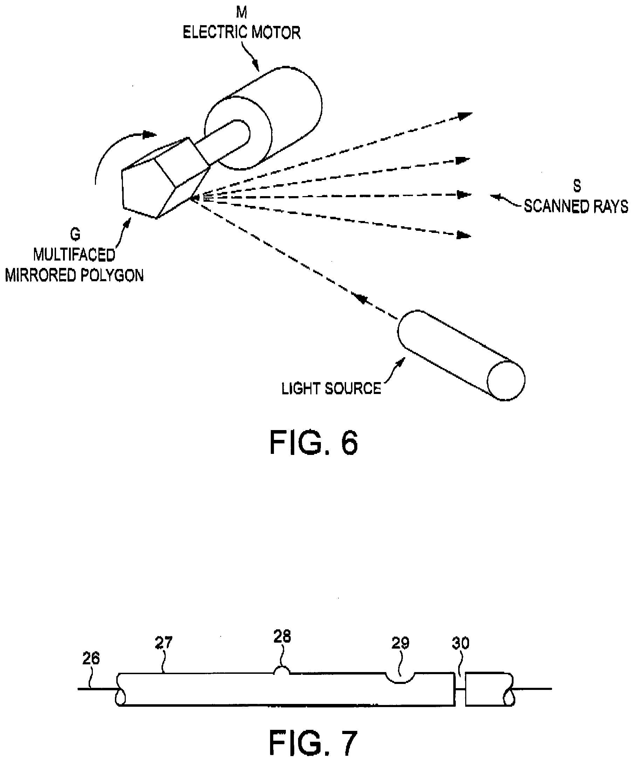

In order to illustrate the advantages of the invention in more detail, reference is made to Fig 6 and Fig 7 whereby the invention will be compared with known prior art.

Fig 6 shows a prior art scanning system comprising a motor M driving known multi-faced mirrored polygon scanning system G, illuminated -with a ray of light from source S.

As obvious to one skilled in the arts, the scanning frequency of this system is limited by the rotational speed of the motor M and the number of facets on the mirrored polygon G receiving the beam of light from a light source S. In practice, a system using this principle, could achieve up to 800 scans /sec.

By way of example of the operation of the prior art, Fig 7 shows a section of an electric cable profile to be scanned whereby the metallic conductor 26 is insulated with plastic material 27. The usual surface faults that may occur during manufacture are ridges 28, valleys 29 and a bare patches 30, any one of which could be 2-3 mm in length. Let us assume that this cable was manufactured at a production speed of 1,200 meters/min, or 20,000 mm/sec, the distance between two successive scans, using the 800 scan system of Fig 6, will be 20,000/ 800 = 25mm. Therefore the illustrated prior art system is unlikely to detect any of the said surface faults.

In other known prior art, an alternative non-scanning optical system exists, (not shown) for checking surface integrity, which operates on the Shadow-Graph principle, by responding to changes in light intensity, thereby detecting surface imperfections. This system may detect the ridges, valleys and bare patches shown in Fig 7 and provide a count of the number of said ridges, valleys and bare patches thereof, but does not supply any other information. However fault detection ability of the Shadow-Graph system is dependent on the cable production speed and the length of the surface faults.

By comparison with the prior art as described in the system of the present invention as noted in Fig 4.2, is capable of operating at a scanning frequency of 40,000 scans/sec. Therefore considering the example in Fig 5 of a production line running at a speed of 1,200 m/ min or 20,000 mm/sec, the distance between two successive scans will be 20,000/ 40,000 mm, that means 2 scans per 0.5 mm of product length.

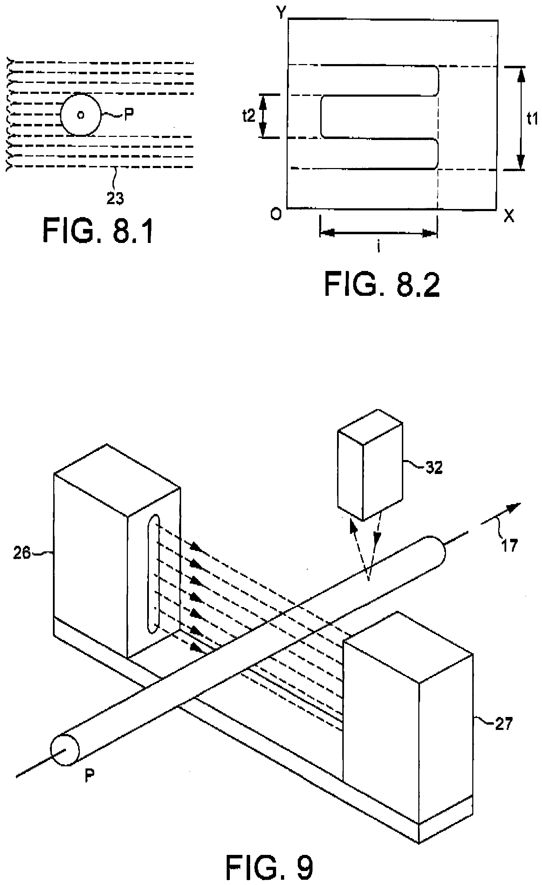

It is obvious from this example that the advantage of the present invention in an application of a product travelling at a high manufacturing speed is two-fold, firstly it provides a close coverage of the profile of the product, whereby it measures accurately the diameter or size of the product and secondly, follows closely the contour of the surface profile of the product, thereby locating any faults such as ridges valleys and the like, measuring the size of said faults and itemizing separately the number of each fault as it occurs along the length of said product.
We will now explain in more detail the operation of the invention. Fig 8.1 shows a side view of product P, being scanned by a curtain sheet or rays 23 and with reference to Fig 5 , the resultant format of said rays after passing there through , are focused by lens 24 on to a photo sensor housed in unit 25 . The said photo sensor in unit 25 performs spectral analysis of the said resultant rays and produces a waveform as shown in graphical display in Fig 8.2 ,which follows accurately the path of said scanned rays as they travel across said product P. The X axis in Fig 8.2 represents the light intensity (i) of the said rays and the Y axis represents transit time (t1) of said rays across the aperture of lens 24 .

The dimensional and surface imperfections of said product P are derived by time related analysis of the time interval (t 2) as depicted in Fig 8.2. Fig. 9, illustrates a complete system for performing dimensional and surface integrity measurements on an electric cable P in its path of travel 17, comprising unit 26 housing items 18.1, 18.2, 20, and 22 and unit 27 housing items 24 and 25 .

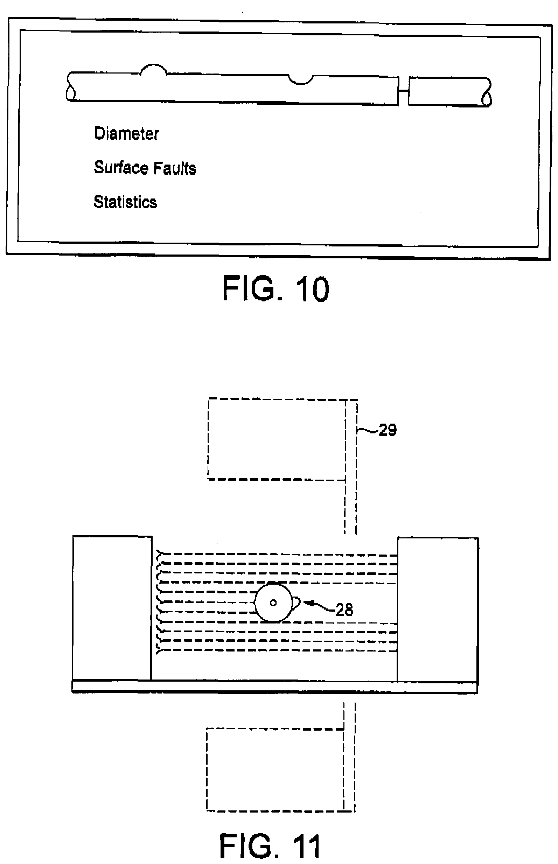

Unit 27 can output all the said measurement information by preferably wireless communication such as "Blue Tooth" and the like, to Display and Data Logging Station Fig 10. Fig 11 shows a side view of the invention, which up to this point we have considered as a "single plane', profile system.

However it will be obvious to a person familiar with the arts , that some surface imperfections 28, shown in Fig.11, will be missed, as these are on the" blind "side of the profile . For this purpose a" two plane" profile system is used 29 (shown dotted), to overcome this problem. In high quality product requirements, a "three plane " profile system (not shown) is recommended.

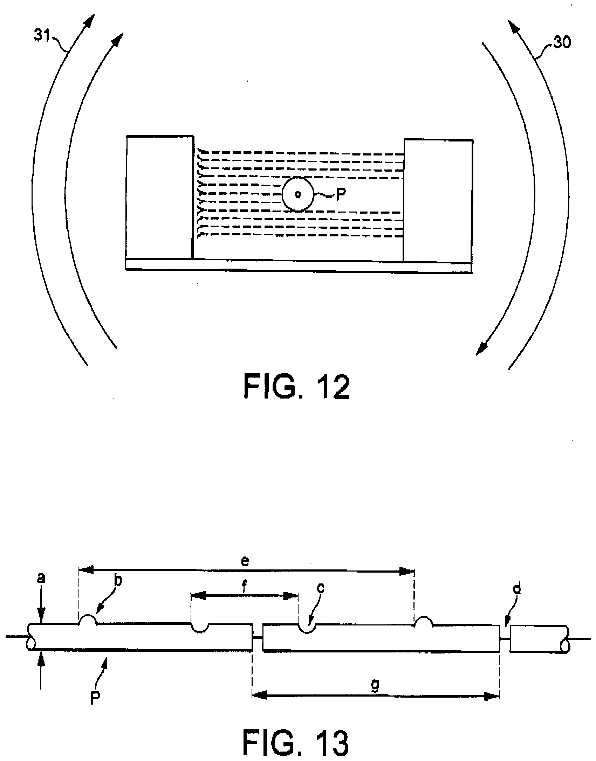

As a more cost effective solution to overcome the all round detection of surface imperfections, a "single plane" system may be used Fig. 12, whereby it oscillates in a "to and fro" motion 30 about the centre of the travelling cable product P , or alternatively rotates in a continuous motion 31 around said product P.

In order to further enhance the application usefulness of the present invention, a proprietary Laser Doppler ,non-contact speed/ length Gauge 32, such as the Proton SL3060 , shown in Fig, 9 may be employed , to provide accurate length information through said wireless transmission to the said Data Logging Station Fig. 10 Fig. 13 illustrates an electric cable P, whereby using the dimensional and surface measurements of unit 27 and the length information from said Proton Gauge 32, the following results are obtained; (a) Product diameter ,instant/average, (b) Ridge size/length (c) Valley size /length, (d) Bare Patches length, (e) Distance between successive Ridges, (f) Distance between successive Valleys, (g) Distance between Bare Patches, as well as, Number of Ridges /unit length, Number of Valleys / unit length, and Total Number of Ridges and Valleys .

The dimensional measurement and surface integrity results are displayed on the of screen of the Data Logging Station Fig10, together with a continuously updating image of cable product P . A "freeze frame " facility is available on the said screen ,in order to inspect periodically the progress of said product during manufacture.

When Bare Patches are detected, production stops ,and the cable run has to be scrapped . However if the Bare Patches are detected near the end of the cable run, it may be possible to salvage part of the cable . An additional advantage of this invention is that the Manufacturer, can use the available measurement and surface integrity information for Statistical ,as well as Diagnostic purposes ,whereby the frequency and location of specific faults can assist in finding which section of the production line, is the cause of the said repetitive faults . The facility of data logging the dimensional and surface integrity information as described in this disclosure, enables the Manufacturer to set tolerance limits to the particular product under manufacture, thereby a certain amount of small size surface imperfections and or diameter variations, may be acceptable for the intended application and use of that product.

## Claims

1. Apparatus for high frequency scanning a product being manufactured in a continuous linear process, the apparatus comprising:
two high frequency generators (3,4) providing output of identical frequency but of opposing phase,
a magnetic foil (1) with a mirrored face mounted for oscillation about a torsion axis (2),
the foil (1) being magnetised to provide regions of opposite polarity thereon respectively to each side of said torsion axis (2),
a pair of induction coils (5,6) operatively associated with each of said generators (3,4),
each coil (5,6) generating a magnetic force of alternating positive and negative polarity under the influence of said opposed phase output frequencies of the generators (3),
the magnetic force interacting respectively with said regions to provide a main magnetic driving force acting on one of said regions to oscillate the foil (1) about the torsion axis (2) and an opposing control magnetic force acting on the other one of said regions to stabilise said oscillation and control the angular extent thereof,
wherein the amplitude of the main magnetic driving force is greater than the amplitude of the control magnetic force,
a light source (20) for projecting a ray of light onto the mirrored face of the foil (1) as it oscillates to direct successive curtains of parallel rays across the product in its linear path of travel to scan the product at the frequency of the generators (3,4), and
detector means for receiving the resulting format of the parallel rays of light on the other side of the product after the passage of the product, there through, and
analysis means (25) for analysing the format of the resulting light rays after passage across the product and adapted to provide dimensional measurements and surface integrity of the product.

2. Apparatus as claimed in claim 1 wherein the source of light (20) directs a ray on to the mirrored face of said oscillating magnetic foil (1) thereby to create a series of consecutive rays, a first lens (22) for receiving said consecutive rays to produce a curtain of parallel rays for scanning the product from one side thereof.

3. Apparatus as claimed in claim 2 wherein a second lens (24) is provided for focusing said rays after being intercepted by said moving product for analysis by said analysis means (25) to determine the dimensional properties and surface integrity of the product.

4. Apparatus as claimed in any preceding claim wherein said analysis means (25) includes a photo-sensor for performing spectral analysis of said focussed rays thereon thereby to provide a measure of dimensional and surface imperfections of the product.

5. Apparatus as claimed in any preceding claim wherein the source of light (2) is a laser light.

6. Apparatus as claimed in any one of claims 1 to 4 wherein the source of light (2) is a light emitting diode.

## Patentansprüche

1. Vorrichtung zur Hochfrequenzabtastung eines Produkts, das in einem kontinuierlichen linearen Prozess hergestellt wird, wobei die Vorrichtung umfasst:
zwei Hochfrequenzgeneratoren (3, 4), die eine Ausgabe gleicher Frequenz aber entgegengesetzter Phase liefern,
eine Magnetfolie (1) mit einer verspiegelten Fläche, die zur Oszillation um eine Torsionsachse (2) angeordnet ist,
wobei die Folie (1) magnetisiert ist, um Bereiche mit entgegengesetzter Polarität darauf entsprechend für jede Seite der Torsionsachse (2) bereitzustellen,
ein Paar Induktionsspulen (5, 6), die den jeweiligen Generatoren (3, 4) operativ zugeordnet sind,
wobei jede Spule (5, 6) unter dem Einfluss der von den Generatoren (3) ausgegebenen Frequenzen entgegengesetzter Phasen eine Magnetkraft mit alternierender positiver und negativer Polarität generiert,
wobei die Magnetkraft mit den Bereichen entsprechend zusammenwirkt, um eine magnetische Hauptantriebskraft bereitzustellen, die auf einen der Bereiche wirkt, um die Folie (1) um die Torsionsachse (2) zu oszillieren zu lassen, und um eine entgegengesetzte magnetische Steuerkraft bereitzustellen, die auf den anderen Bereich wirkt, um die Oszillation zu stabilisieren und deren Winkelausdehnung zu steuern,
wobei die Amplitude der magnetischen Hauptantriebskraft größer ist als die Amplitude der magnetischen Steuerkraft,
eine Lichtquelle (20) zum Projizieren eines Lichtstrahls auf die verspiegelte Fläche der Folie (1), wenn sie oszilliert, um aufeinanderfolgende Vorhänge paralleler Strahlen auf das Produkt zu richten während seines linearen Bewegungswegs, um das Produkt bei der Frequenz der Generatoren (3,4) abzutasten, und
Detektionsmittel zum Empfangen des resultierenden Formats der parallelen Lichtstrahlen auf der anderen Seite des Produkts, nach dem Durchgang des Produkts dort hindurch, und
Analysemittel (25) zum Analysieren des Formats der resultierenden Lichtstrahlen nach dem Durchgang des Produkts und ausgebildet zur Bereitstellung von dimensionalen Messungen und der Oberflächenintegrität des Produkts.

2. Vorrichtung nach Anspruch 1, wobei die Lichtquelle (20) einen Strahl auf die verspiegelte Fläche der oszillierenden Magnetfolie (1) richtet, um dadurch eine Reihe aufeinanderfolgender Strahlen zu erzeugen, eine erste Linse (22) zum Empfangen der aufeinanderfolgende Strahlen, um einen Vorhang aus parallelen Strahlen zum Abtasten des Produkt von einer Seite davon zu erzeugen.

3. Vorrichtung nach Anspruch 2, wobei eine zweite Linse (24) vorgesehen ist zum Fokussieren der Strahlen, nachdem sie durch das sich bewegende Produkt abgefangen wurden, für eine Analyse durch die Analysemittel (25), um die dimensionalen Eigenschaften und die Oberflächenintegrität des Produkts zu bestimmen.

4. Vorrichtung nach einem der vorhergehenden Ansprüche, wobei die Analysemittel (25) einen Fotosensor zum Durchführen einer Spektralanalyse der darauf fokussierten Strahlen aufweist, um dadurch eine Messung der Dimensions- und Oberflächenfehler des Produkts zu liefern.

5. Vorrichtung nach einem der vorhergehenden Ansprüche, wobei die Lichtquelle (2) ein Laserlicht ist.

6. Vorrichtung nach einem der Ansprüche 1 bis 4, wobei die Lichtquelle (2) eine Leuchtdiode ist.

## Revendications

1. Dispositif pour le balayage haute fréquence d'un produit fabriqué à l'aide d'un procédé linéaire continu, le dispositif comprenant :
deux générateur haute fréquence (3, 4) fournissant une sortie de fréquence identique mais de phase opposée,
un film magnétique (1) avec une face réfléchie, monté de manière à osciller autour d'un axe de torsion (2),
le film (1) étant magnétisé pour fournir des régions de polarité opposée sur celui-ci respectivement de chaque côté dudit axe de torsion (2),
une paire de bobines d'induction (5, 6) fonctionnellement associée à chacun desdits générateurs (3, 4),
chaque bobine (5, 6) générant une force magnétique de polarité positive et négative alternée sous l'influence desdites fréquences de sortie de phase opposée des générateurs (3),
la force magnétique interagissant respectivement avec lesdites régions pour fournir une force d'entraînement magnétique principale agissant sur l'une desdites régions pour faire osciller le film (1) autour de l'axe de torsion (2) et une force magnétique de commande opposée agissant sur l'autre desdites régions afin de stabiliser ladite oscillation et de commander l'étendue angulaire de celle-ci,
dans lequel l'amplitude de la force d'entraînement magnétique principale est plus grande que l'amplitude de la force magnétique de commande,
une source de lumière (20) destinée à projeter un rayon lumineux sur la face réfléchie du film (1) pendant l'oscillation de celui-ci pour diriger des rideaux de rayons parallèles successifs à travers le produit sur son trajet de déplacement linéaire afin de balayer le produit à la fréquence des générateurs (3, 4), et
un moyen de détection permettant de recevoir le format résultant des rayons lumineux parallèles sur l'autre côté du produit après le passage du produit à travers celui-ci, et
un moyen d'analyse (25) destiné à analyser le format des rayons lumineux résultants à travers le produit, et adapté pour fournir des mesures dimensionnelles et l'intégrité de surface du produit.

2. Dispositif selon la revendication 1, dans lequel la source de lumière (20) dirige un rayon sur la face réfléchie dudit film magnétique oscillant (1) pour ainsi créer une série de rayons consécutifs, une première lentille (22) destinée à recevoir lesdits rayons consécutifs pour produire un rideau de rayons parallèles permettant de balayer le produit depuis un côté de celui-ci.

3. Dispositif selon la revendication 2, dans lequel il est prévu une deuxième lentille (24) pour focaliser lesdits rayons après l'interception par ledit produit en circulation pour l'analyse par ledit moyen d'analyse (25) afin de déterminer les propriétés dimensionnelles et l'intégrité de surface du produit.

4. Dispositif selon l'une quelconque des revendications précédentes, dans lequel ledit moyen d'analyse (25) comprend un photodétecteur destinée à exécuter une analyse spectrale desdits rayons focalisés sur celui-ci, pour ainsi fournir une mesure des imperfections relatives aux dimensions et à la surface du produit.

5. Dispositif selon l'une quelconque des revendications précédentes, dans lequel la source de lumière (2) est une lumière laser.

6. Dispositif selon l'une quelconque des revendications 1 à 4, dans lequel la source de lumière (2) est une diode électroluminescente.
